(19) **Europäisches Patentamt / European Patent Office / Office européen des brevets**

(11) **EP 4 661 516 A1**

(12) **EUROPEAN PATENT APPLICATION**
published in accordance with Art. 153(4) EPC

(43) Date of publication:
**10.12.2025 Bulletin 2025/50**

(21) Application number: **23919120.8**

(22) Date of filing: **03.02.2023**

(51) International Patent Classification (IPC):
*H04W 52/18* (2009.01)

(52) Cooperative Patent Classification (CPC):
**H04L 5/00; H04W 4/02; H04W 52/18;
H04W 72/044; H04W 72/40**

(86) International application number:
**PCT/CN2023/074476**

(87) International publication number:
**WO 2024/159545 (08.08.2024 Gazette 2024/32)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Beijing Xiaomi Mobile Software Co.,
Ltd.
Beijing 100085 (CN)**

(72) Inventor: **JIANG, Xiaowei
Beijing 100085 (CN)**

(74) Representative: **Gunzelmann, Rainer
Wuesthoff & Wuesthoff
Patentanwälte und Rechtsanwalt PartG mbB
Schweigerstraße 2
81541 München (DE)**

(54) **METHOD AND APPARATUS FOR TRANSMITTING POSITIONING REFERENCE SIGNAL, AND
STORAGE MEDIUM**

(57) The present disclosure relates to a method and apparatus for transmitting a positioning reference signal, and a storage medium. The method comprises: a first terminal device determines power configuration information corresponding to a sidelink positioning reference signal (SL PRS), and according to the power configuration information, determines a first transmit power corresponding to the SL PRS. In this way, the first transmit power of the SL PRS can be flexibly controlled according to the power configuration information.

The first terminal determines a first transmission power corresponding to a sidelink positioning reference signal (SL PRS) according to power configuration information corresponding to the SL PRS — S201

The first terminal transmits the SL PRS to the second terminal according to the first transmission power — S202

Fig. 2

## Description

## FIELD

The present disclosure relates to the field of communication technologies, in particular to a method and an apparatus for transmitting a positioning reference signal, and a storage medium.

## BACKGROUND

With the development of wireless communication technologies, in order to realize direct communication between terminals, the 3rd generation partnership project (3GPP) defines a communication mode of a sidelink (which may also be called a direct link). For example, a typical application scenario of the sidelink is vehicle-to-everything (V2X). In an internet of vehicles, each vehicle may be used as a terminal, and information may be transmitted between terminals through the sidelink, thus effectively reducing a communication delay.

In the sidelink communication scenario, in order to locate or range the terminal, the terminal needs to transmit and/or receive a sidelink positioning reference signal (SL PRS).

## SUMMARY

The present disclosure provides a method and an apparatus for transmitting a positioning reference signal, and a storage medium.

According to embodiments of a first aspect of the present disclosure, a method for transmitting a positioning reference signal is provided. The method is executed by a first terminal, and the method includes: determining a first transmission power corresponding to a sidelink positioning reference signal (SL PRS) according to power configuration information corresponding to the SL PRS; and transmitting the SL PRS to a second terminal according to the first transmission power.

In some embodiments, the power configuration information includes a second transmission power, and determining the first transmission power corresponding to the SL PRS according to the power configuration information corresponding to the SL PRS includes: in a case that the first terminal meets a first condition, taking the second transmission power as the first transmission power. The first condition comprises at least one of: a transmission mode of the SL PRS being a broadcast mode or a multicast mode; the first terminal comprising one piece of power configuration information; the first terminal adopting mode 2 to allocate resources for the SL PRS; or the first terminal not acquiring a path loss of a sidelink of the second terminal.

In some embodiments, the second transmission power is an average resource power corresponding to a radio resource for transmitting the SL PRS.

In some embodiments, the radio resource comprises a resource element (RE), and the average resource power is energy per RE (EPRE).

In some embodiments, the power configuration information includes at least one of a path loss compensation factor, a target reception power or a path loss reference signal; and determining the first transmission power corresponding to the SL PRS according to the power configuration information corresponding to the SL PRS includes: in a case that the first terminal meets a second condition, determining the first transmission power according to the power configuration information. The second condition includes at least one of: a transmission mode of the SL PRS being a unicast mode or a multicast mode; the first terminal comprising a plurality of pieces of power configuration information; the first terminal comprising one piece of power configuration information; or the first terminal acquiring a path loss of a sidelink of the second terminal.

In some embodiments, determining the first transmission power according to the power configuration information includes: measuring the path loss according to the path loss reference signal; and calculating the first transmission power according to the path loss compensation factor, the target reception power and the path loss.

In some embodiments, the path loss reference signal includes at least one of: a sidelink synchronization signal block (SL SSB); a sidelink channel state information-reference signal (SL CSI-RS); a sidelink positioning reference signal (SL PRS); a physical sidelink shared channel (SL PSSCH); or a physical sidelink control channel (SL PSCCH).

In some embodiments, the power configuration information is determined in a way of: determining the power configuration information according to sidelink pre-configuration information configured in advance; or receiving sidelink configuration information transmitted by a network device, and determining the power configuration information according to the sidelink configuration information.

In some embodiments, receiving the sidelink configuration information transmitted by the network device includes: receiving a broadcast message transmitted by the network device, wherein the broadcast message comprises the sidelink configuration information; or receiving a first message transmitted by the network device to the first terminal, wherein the first message comprises the sidelink configuration information.

In some embodiments, the power configuration information is determined in a way of: determining a resource allocation mode corresponding to the SL PRS; and determining the power configuration information corresponding to the SL PRS according to the resource allocation mode.

In some embodiments, the resource allocation mode is mode 1 or mode 2, mode 1 is a resource allocation mode in which resource selection is made based on a network device, and mode 2 is a resource allocation mode in which resource selection is made based on a terminal.

In some embodiments, determining the power configuration information corresponding to the SL PRS according to the resource allocation mode includes: in a case that the resource allocation mode is mode 2, and the sidelink configuration information transmitted by the network device is received, determining the power configuration information according to the sidelink configuration information; or in a case that the resource allocation mode is mode 2, and the sidelink configuration information transmitted by the network device is not received, determining the power configuration information according to sidelink configuration information configured in advance.

In some embodiments, in a case that the resource allocation mode is mode 1, a radio resource configured to transmit the SL PRS is allocated by the network device in a dynamic scheduling mode or a configured grant (CG) mode; and determining the power configuration information corresponding to the SL PRS according to the resource allocation mode includes: receiving a radio resource control (RRC) message or a medium access control control element (MAC CE) transmitted by the network device, and acquiring the power configuration information corresponding to the first terminal according to the RRC message or the MAC CE; or in a case that the radio resource is allocated by the network device in the dynamic scheduling mode, receiving a scheduling indication corresponding to each dynamic scheduling, and acquiring the power configuration information from the scheduling indication; or in a case that the radio resource is allocated by the network device in the CG mode, receiving a configuration indication corresponding to each CG, and acquiring the power configuration information from the configuration indication.

In some embodiments, acquiring the power configuration information from the configuration indication includes: acquiring the power configuration information corresponding to the first terminal from the configuration indication; or acquiring the power configuration information corresponding to the CG from the configuration indication; or acquiring the power configuration information corresponding to at least one SL PRS resource of the CG from the configuration indication; or acquiring the power configuration information corresponding to at least one SL PRS resource set of the CG from the configuration indication.

In some embodiments, the method further includes: transmitting the power configuration information to the second terminal.

According to embodiments of a second aspect of the present disclosure, a method for transmitting a positioning reference signal is provided. The method is performed by a network device, and the method includes: transmitting sidelink configuration information to a first terminal, in which the sidelink configuration information is configured to instruct the first terminal to determine power configuration information corresponding to a sidelink positioning reference signal (SL PRS).

In some embodiments, transmitting the sidelink configuration information to the first terminal includes: transmitting the sidelink configuration information to the first terminal through a broadcast message; or transmitting the sidelink configuration information to the first terminal through a first message, wherein the first message is a dedicated message corresponding to the first terminal.

In some embodiments, the power configuration information includes a second transmission power corresponding to the SL PRS.

In some embodiments, the power configuration information includes at least one of: a path loss compensation factor; a target reception power; or a path loss reference signal.

In some embodiments, the path loss reference signal includes at least one of: a sidelink synchronization signal block (SL SSB); a sidelink channel state information-reference signal (SL CSI-RS); a sidelink positioning reference signal (SL PRS); a physical sidelink shared channel (SL PSSCH); or a physical sidelink control channel (SL PSCCH).

According to embodiments of a third aspect of the present disclosure, an apparatus for transmitting a positioning reference signal is provided. The apparatus is applied to a first terminal, and the apparatus includes: a first processing module configured to determine a first transmission power corresponding to a sidelink positioning reference signal (SL PRS) according to power configuration information corresponding to the SL PRS; and a first transmitting module configured to send the SL PRS to a second terminal according to the first transmission power.

According to embodiments of a fourth aspect of the present disclosure, an apparatus for transmitting a positioning reference signal is provided. The apparatus is applied to a network device, and the apparatus includes: a second transmitting module configured to send sidelink configuration information to a first terminal, in which the sidelink configuration information is configured to instruct the first terminal to determine power configuration information corresponding to a sidelink positioning reference signal (SL PRS).

According to embodiments of a fifth aspect of the present disclosure, an apparatus for transmitting a positioning reference signal is provided. The apparatus includes: a processor; and a memory configured to store instructions executable by the processor. The processor is configured to execute the steps of the method for transmitting the positioning reference signal provided in the first aspect of the present disclosure.

According to embodiments of a sixth aspect of the present disclosure, an apparatus for transmitting a positioning reference signal is provided, and the apparatus includes: a processor; and a memory configured to store instructions executable by the processor. The processor is configured to execute the steps of the method for transmitting the positioning reference signal provided in the second aspect of the present disclosure.

According to embodiments of a seventh aspect of the present disclosure, a computer-readable storage medium is provided, on which computer program instructions are stored, which, when executed by a processor, cause the steps of the method for transmitting the positioning reference signal provided in the first aspect of the present disclosure to be executed.

According to embodiments of an eighth aspect of the present disclosure, a computer-readable storage medium is provided, on which computer program instructions are stored, which, when executed by a processor, cause the steps of the method for transmitting the positioning reference signal provided in the second aspect of the present disclosure to be executed.

According to embodiments of a ninth aspect of the present disclosure, a communication system is provided, and includes: a first terminal configured to perform the method for transmitting the positioning reference signal provided in the first aspect of the present disclosure; and a network device configured to perform the method for transmitting the positioning reference signal provided in the second aspect of the present disclosure.

The technical scheme provided by the embodiments of the present disclosure may include the following beneficial effects: the first terminal determines the power configuration information corresponding to the SL PRS, and determines the first transmission power corresponding to the SL PRS according to the power configuration information. In this way, the transmission power of the SL PRS may be flexibly controlled according to the power configuration information.

It is to be understood that both the foregoing general description and the following detailed description are illustrative and explanatory only, and are not restrictive of the present disclosure.

**BRIEF DESCRIPTION OF THE DRAWINGS**

The accompanying drawings, which are incorporated in and constitute a part of the specification, illustrate embodiments consistent with the present disclosure, and together with the description, serve to explain the principle of the present disclosure.

Fig. 1 is a schematic diagram of a communication system according to an illustrative embodiment.
Fig. 2 is a flow chart of a method for transmitting a positioning reference signal according to an illustrative embodiment.
Fig. 3 is a flow chart of a method for transmitting a positioning reference signal according to an illustrative embodiment.
Fig. 4 is a flow chart of a method for transmitting a positioning reference signal according to an illustrative embodiment.

Fig. 5 is a flow chart of a method for transmitting a positioning reference signal according to an illustrative embodiment.
Fig. 6 is a flow chart of a method for transmitting a positioning reference signal according to an illustrative embodiment.
Fig. 7 is a flow chart of a method for transmitting a positioning reference signal according to an illustrative embodiment.
Fig. 8 is a block diagram of an apparatus for transmitting a positioning reference signal according to an illustrative embodiment.
Fig. 9 is a block diagram of an apparatus for transmitting a positioning reference signal according to an illustrative embodiment.
Fig. 10 is a block diagram of an apparatus for transmitting a positioning reference signal according to an illustrative embodiment.

**DETAILED DESCRIPTION**

Reference will now be made in detail to illustrative embodiments, examples of which are illustrated in the accompanying drawings. When the following description refers to the drawings, unless otherwise indicated, the same numbers in different drawings indicate the same or similar elements. The implementations described in the following illustrative embodiments do not represent all implementations consistent with the present disclosure. Rather, they are merely examples of apparatuses and methods consistent with some aspects of the present disclosure as detailed in the appended claims.

It should be noted that all actions of acquiring signals, information or data in the present disclosure are carried out under the premise of complying with corresponding data protection laws and policies of local countries and obtaining authorization from corresponding apparatus owners.

In the description of the present disclosure, terms such as "first" and "second" are used to distinguish similar objects without necessarily being understood as a specific order or precedence. In addition, in the description with reference to the drawings, the same reference numerals in different drawings indicate the same elements unless otherwise stated.

In the description of the present disclosure, unless otherwise specified, "a plurality of/multiple" means two or more, and other quantifiers are similar. Terms such as "at least one item", "one item or more items" or similar expressions refer to any combination of these items, including any combination of single item or multiple items. For example, at least one item may represent any number. For another example, one or more of a, b and c may be expressed as: a, b, c, a-b, a-c, b-c, or a-b-c, where a, b and c may be singular or plural. The term "and/or" describes an association relationship of associated objects, which means that there may be three kinds of relationships. For example, A and/or B may mean that A exists alone, both A and B exist, and B exists alone, where A and B may be singular or plural. The character "/" indicates that former and latter associated objects have an OR relationship. The singular forms such as "a", "an", "the" and "said" are also intended to include the plural forms, unless the context clearly indicates other meaning.

Although the operations or steps are described in a specific order in the embodiments or drawings of the present disclosure, it should not be construed as requiring that these operations or steps be performed in the specific order or serial order shown, or that all the operations or steps shown be performed to achieve the desired results. In the embodiments of the present disclosure, these operations or steps may be performed in any order without contradiction, or these operations or steps may also be performed in parallel, or some of these operations or steps may be performed, or the operations or steps in multiple embodiments or drawings may also be arbitrarily combined, which is not limited by the present disclosure.

First, an implementation environment of embodiments of the present disclosure will be introduced.

The technical scheme of the embodiments of the present disclosure may be applied to various communication systems. The communication system may include one or more of the 4th generation (4G) communication system, the 5th generation (5G) communication system, and other future wireless communication systems (such as 6G). The communication system may also include a public land mobile network (PLMN), a device-to-device (D2D) communication system, a machine-to-machine (M2M) communication system, an Internet of Things (IoT) communication system, a vehicle-to-everything (V2X) communication system or other communication systems.

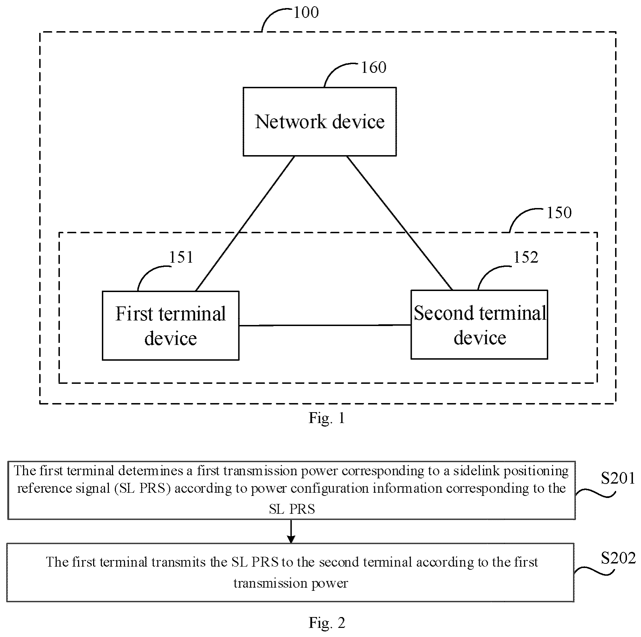

Fig. 1 is a schematic diagram of a communication system 100 according to an illustrative embodiment. As shown in Fig. 1, the communication system 100 may include a terminal 150 and a network device 160. The communication system may be used to support a 4G network access technology, such as a long term evolution (LTE) access technology, or a 5G network access technology, such as a new radio access technology (New RAT), or other future wireless communication technologies. It should be noted that, in this communication system, one or more network devices and one or more terminals may be arranged, and the number of the network devices and the number of the terminals in the communication system shown in Fig. 1 are only an example of adaptability, which is not limited by the present disclosure.

The network device in Fig. 1 may be used to support access of the terminal. For example, the network device may be an evolutional node B (eNB or eNodeB) in an LTE; the network device may also be a next generation node B (gNB or gNodeB) in a 5G network; the network device may also be a NG-radio access network (NG-RAN) device in the 5G network; and the network device may also be a base station, a broadband network gateway (BNG), a convergence switch or a non-3GPP access device in a future evolved public land mobile network (PLMN). Optionally, the network device in the embodiments of the present disclosure may include various forms of base stations, such as macro base stations, micro base stations (also called small stations), relay stations, access points, 5G base stations or future base stations, satellites, transmitting and receiving points (TRPs), transmitting points (TPs), mobile switching centers, device-to-device (D2D), machine-to-machine (M2M), Internet of Things (IoT), vehicle-to-everything (V2X) or other devices that assume the function of a base station in a communication system, etc., which is not limited by the embodiments of the present disclosure. For convenience of description, in all embodiments of the present disclosure, devices that provide wireless communication functions for terminals are collectively referred to as network devices or base stations.

The terminal in Fig. 1 may be an electronic device that provides voice or data connectivity. For example, the terminal may also be called user equipment (UE), a subscriber unit, a mobile station, a station, a terminal device, etc. For example, the terminal may include a smart phone, a smart wearable device, a smart speaker, a smart tablet, a wireless modem, a wireless local loop (WLL) station, a personal digital assistant (PDA), a customer premise equipment (CPE), and the like. With the development of wireless communication technology, devices that may access the communication system, communicate with network devices of the communication system, communicate with other objects through the communication system, or two or more devices that may communicate directly may all be terminals in the embodiments of the present disclosure, such as terminals and vehicles in intelligent transportation, household equipment in smart homes, power meter reading instruments in smart grids, voltage monitoring instruments, environmental monitoring instruments, video monitoring instruments in intelligent security networks, cash registers, etc. In the embodiments of the present disclosure, the terminal may communicate with the network device. Multiple terminals may also communicate with each other. The terminal may be static or mobile, which is not limited by the present disclosure.

In some embodiments, the terminals in Fig. 1 may include a first terminal 151 and a second terminal 152, and the communication between the first terminal 151 and the second terminal 152 may be made through a sidelink. A way of sidelink communication between the first terminal 151 and the second terminal 152 may include any one or more of unicast, multicast or broadcast. It should be noted that in Fig. 1, the terminal 150 may further include a third terminal, a fourth terminal or more terminals. One or more first terminals 151 may be provided, and one or more second terminals 152 may also be provided, which is not limited by the present disclosure.

In some embodiments, the first terminal may communicate with the network device through a non-sidelink, which may include an uplink and/or a downlink between the first terminal and the network device. For example, the non-sidelink may include a physical random access channel (PRACH), a physical uplink control channel (PUCCH), a physical uplink shared channel (PUSCH), a physical downlink shared channel (PDSCH), a physical downlink control channel (PDCCH) and other links. Similarly, the second terminal may also communicate with the network device through a non-sidelink.

Fig. 2 is a flow chart of a method for transmitting a positioning reference signal according to an illustrative embodiment. This method may be performed by the first terminal in the above communication system. As shown in Fig. 2, the method may include the following steps.

In step S201, the first terminal determines a first transmission power corresponding to a sidelink positioning reference signal (SL PRS) according to power configuration information corresponding to the SL PRS.

In step S202, the first terminal transmits the SL PRS to the second terminal according to the first transmission power.

The second terminal is a terminal that receives the SL PRS, and one or more second terminals may be arranged.

In some embodiments, the first terminal may send the SL PRS to at least one second terminal through a sidelink.

In some other embodiments, the first terminal may broadcast the SL PRS, and at least one second terminal may receive the SL PRS broadcast by the first terminal.

In some embodiments, the power configuration information may include a second transmission power, and the second transmission power may be taken as the first transmission power.

The second transmission power may be a resource power corresponding to a radio resource for transmitting the SL PRS. For example, the first transmission power may be an average resource power, a maximum resource power or a minimum resource power corresponding to the radio resource for transmitting the SL PRS.

In an implementation, the radio resource for transmitting the SL PRS may include at least one resource element (RE), and the average resource power may be energy per resource element (EPRE). The EPRE may be used to represent an average power of at least one RE. Similarly, the maximum resource power may represent a maximum power of at least one RE, and the minimum resource power may represent a minimum power of at least one RE.

In another implementation, the radio resource for transmitting the SL PRS may include at least one resource block (RB), and the average resource power may be an average power of each RB. Similarly, the maximum resource power may represent a maximum power of at least one RB, and the minimum resource power may represent a minimum power of at least one RB.

In an implementation, the second transmission power may be a power value, and the unit of the second transmission power may be decibel milliwatt (dBm) or milliwatt (mw).

In some other embodiments, the power configuration information may include at least one of a path loss compensation factor (alpha), a target reception power (P0) and a path loss reference signal.

The path loss compensation factor may be any value between 0 and 1, and the path loss compensation may be obtained by multiplying the path loss compensation factor with the path loss. For example, the path loss compensation factor of 1 indicates that the whole path loss is compensated, and the path loss compensation factor of 0 indicates that the path loss is not compensated at all.

The target reception power is used to indicate a power that a receiving terminal expects to receive.

The path loss reference signal is a signal for measuring the path loss.

In some embodiments, the first terminal may measure the path loss according to the path loss reference signal, and calculate the first transmission power according to the path loss compensation factor, the target reception power and the path loss.

For example, the first terminal may calculate the first transmission power corresponding to the SL PRS by a following formula (1):

$$\text{Power} = \text{P0} + \text{alpha} \times \text{PL} \quad (1)$$

Power represents the first transmission power corresponding to the SL PRS, P0 represents the target reception power, alpha represents the path loss compensation factor, and PL represents the path loss measured according to the path loss reference signal.

For another example, the first terminal may calculate the first transmission power corresponding to the SL PRS by a following formula (2):

$$\text{Power} = \text{P0} + \text{alpha} \times \text{PL} + \text{other} \quad (2)$$

Power represents the first transmission power corresponding to the SL PRS, P0 represents the target reception power, alpha represents the path loss compensation factor, PL represents the path loss measured according to the path loss reference signal, and other represents other power compensation parameters, for example, the other power compensation parameters may be preset compensation values.

In some embodiments, the path loss reference signal may include at least one of:

a sidelink synchronization signal block (SL SSB);

a sidelink channel state information-reference signal (SL CSI-RS);

a sidelink positioning reference signal (SL PRS);

a physical sidelink shared channel (PSSCH), for example, a demodulation reference signal (DMRS) of PSSCH; and

a physical sidelink control channel (PSCCH), for example, a DMRS of PSCCH.

In some embodiments, the path loss reference signal may be a signal transmitted by the second terminal to the first terminal. The first terminal is a terminal that transmits the SL PRS, and the second terminal is a terminal that receives the SL PRS.

In this way, the first terminal may calculate the path loss according to a measurement result of the path loss reference signal.

In some other embodiments, the path loss reference signal may be a signal transmitted by the first terminal to the second terminal. Similarly, the first terminal is a terminal that transmits the SL PRS, and the second terminal is a terminal that receives the SL PRS.

In an implementation, the second terminal may calculate the path loss according to the path loss reference signal, and the second terminal may send a first measurement report to the first terminal. The first measurement report may include the calculated path loss.

In an implementation, the second terminal may obtain the measurement result of the path loss reference signal according to the measurement, and the second terminal may send a second measurement report to the first terminal. The second measurement report may include the measurement result. The first terminal may calculate the path loss according to the measurement result.

By adopting the above method, the first terminal determines the power configuration information corresponding to the SL PRS, and determines the first transmission power corresponding to the SL PRS according to the power configuration information. In this way, the transmission power of the SL PRS may be flexibly controlled according to the power configuration information.

In some embodiments of the present disclosure, in a case that the power configuration information includes the second transmission power, and the first terminal meets a first condition, the second transmission power may be taken as the first transmission power. The first condition may include at least one of the following conditions.

Condition 1: a transmission mode of the SL PRS is a broadcast or multicast mode, that is, the first terminal transmits the SL PRS in the broadcast or multicast mode.

Condition 2: the first terminal includes one piece of power configuration information, and the power configuration information includes the second transmission power. For example, the first terminal only acquires the resource power corresponding to the radio resource for transmitting the SL PRS, but does not acquire the path loss compensation factor, the target reception power and the path loss reference signal. The power configuration information may be unique power configuration information of the first terminal.

Condition 3, the first terminal adopts mode 2 to allocate resources for the SL PRS. Mode 2 may be a resource allocation mode in which resource selection is made based on the first terminal, and mode 2 may also be called an autonomous resource allocation mode.

Condition 4: the first terminal does not acquire the path loss of the sidelink of the second terminal. The second terminal may be a terminal that receives the SL PRS, and the second terminal may include one or more terminals.

For example, in a case that the first terminal does not receive the path loss reference signal transmitted by the second terminal, it may be determined that the first terminal does not acquire the path loss of the sidelink of the second terminal. The path loss reference signal may include the SL SSB, SL CSI-RS, SL PRS, PSCCH or PSSCH.

Condition 5: no sidelink has been established between the first terminal and the second terminal. Similarly, the second terminal may be a terminal that receives the SL PRS.

Condition 6: the second terminal is not configured with a measurement report transmitted to the first terminal. The second terminal may be a terminal that receives the SL PRS, and the measurement report may be a CSI-RS report.

Condition 7: the first terminal does not receive a measurement report transmitted by the second terminal. Similarly, the second terminal is a terminal that receives the SL PRS. The measurement report may be a CSI-RS report.

In this way, the first terminal may use the second transmission power as the first transmission power in a case that the first condition is satisfied.

In some embodiments of the present disclosure, the power configuration information may include at least one of a path loss compensation factor, a target reception power and a path loss reference signal, and in a case that the first terminal meets a second condition, the first transmission power may be determined according to the power configuration information. The second condition includes at least one of the following conditions.

Condition 8: a transmitting mode of the SL PRS is a unicast mode or a multicast mode, that is, the first terminal transmits the SL PRS in the unicast mode or the multicast mode.

Condition 9: the first terminal includes a plurality of pieces of power configuration information. For example, in a case that the first terminal acquires not only the second transmission power for transmitting the SL PRS, but also power parameter information such as the path loss compensation factor, the target reception power and the path loss reference signal, the first terminal may preferentially use the power parameter information such as the path loss compensation factor, the target reception power and the path loss reference signal.

Condition 10: the first terminal includes one piece of power configuration information, and the power configuration information includes at least one of the above path loss compensation factor, target reception power and path loss reference signal. For example, the first terminal acquires the path loss compensation factor, the target reception power and the path loss reference signal, but does not acquire the second transmission power for transmitting the SL PRS. The power configuration information may be unique power configuration information of the first terminal.

Condition 11: the first terminal obtains the path loss of the sidelink of the second terminal, and the second terminal is a terminal that receives the SL PRS.

For example, the first terminal may receive the path loss reference signal transmitted by the second terminal, and detect the path loss of the sidelink according to the path loss reference signal. The path loss reference signal may include the SL SSB, SL CSI-RS, SL PRS, PSCCH or PSSCH.

Condition 12: a sidelink is established between the first terminal and the second terminal. Similarly, the second terminal may be a terminal that receives the SL PRS.

Condition 13: the second terminal is configured with a measurement report transmitted to the first terminal. The second terminal may be a terminal that receives the SL PRS, and the measurement report may be a CSI-RS report.

Condition 14: the first terminal receives a measurement report transmitted by the second terminal. Similarly, the second terminal is a terminal that receives the SL PRS, and the measurement report may be a CSI-RS report.

In this way, the first terminal may determine the first transmission power corresponding to the SL PRS according to at least one of the path loss compensation factor, the target reception power and the path loss reference signal in a case that the second condition is satisfied.

In an embodiment of the present disclosure, the power configuration information corresponding to the SL PRS may be determined in any of the following ways, for example.

In some embodiments, the first terminal may determine the power configuration information according to sidelink pre-configuration information configured in advance.

For example, the sidelink pre-configuration information may include the power configuration information.

In some other embodiments, the first terminal may receive the sidelink configuration information transmitted by the network device, and determine the power configuration information accord to the sidelink configuration information.

For example, the sidelink configuration information may include the power configuration information.

For example, the first terminal may receive a broadcast message transmitted by the network device, and the broadcast message may include the sidelink configuration information.

For another example, the first terminal may receive a first message transmitted by the network device to the first terminal, and the first message may include the sidelink configuration information.

The first message may be a dedicated message corresponding to the first terminal. For example, the first message may include at least one of a radio resource control (RRC) message, a medium access control control element (MAC CE), downlink control information (DCI) or other messages transmitted by the network device to the first terminal.

In some other embodiments, the power configuration information may be information agreed by a protocol.

In this way, the first terminal may determine the power configuration information corresponding to the SL PRS in any of the above ways, and determine the first transmission power corresponding to the SL PRS according to the power configuration information. In this way, the transmission power of the SL PRS may be flexibly controlled according to the power configuration information, so that the transmission power of the SL PRS may be avoided from being too large or too small, and the reliability of the transmission of the SL PRS may be improved.

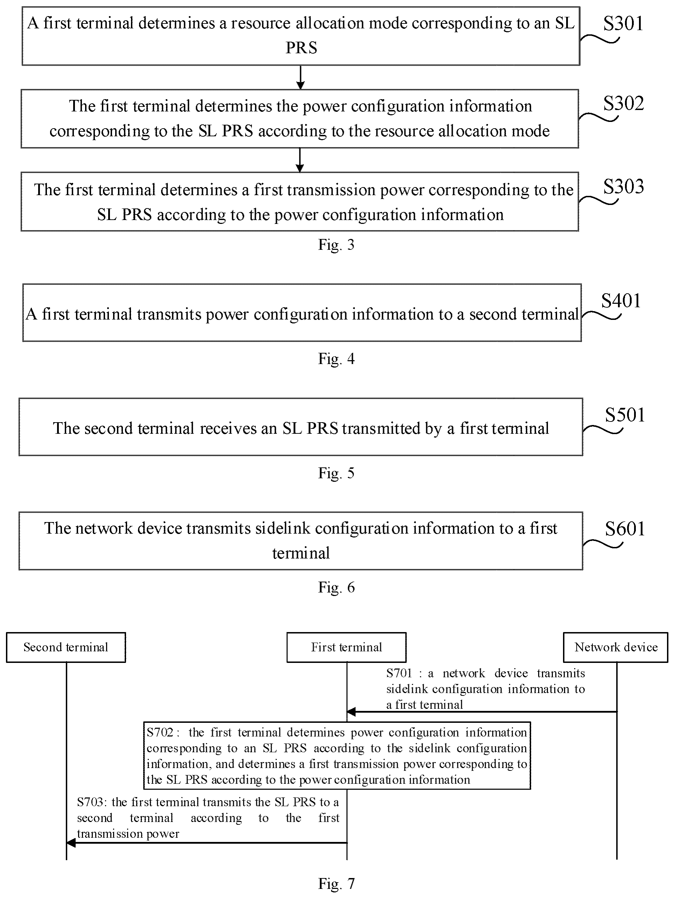

Fig. 3 is a flow chart of a method for transmitting a positioning reference signal according to an illustrative embodiment. As shown in Fig. 3, the method may include the following steps.

In step S301, a first terminal determines a resource allocation mode corresponding to an SL PRS.

In some embodiments, the resource allocation mode may be mode 1 (first resource allocation mode) or mode 2 (second resource allocation mode). Mode 1 may be a resource allocation mode in which resource selection is made based on the network device, and mode 2 may be a resource allocation mode in which resource selection is made based on the terminal. Mode 2 may also be called an autonomous resource allocation mode.

For example, in a case that the resource allocation mode corresponding to the SL PRS is mode 1, the radio resource for the SL PRS is allocated by the network device; and in a case that the resource allocation mode corresponding to the SL PRS is mode 2, the radio resource for the SL PRS is allocated by the first terminal autonomously.

In some embodiments, the resource allocation mode may be a mode determined by the first terminal according to received resource mode configuration information. The resource mode configuration information may be information transmitted by the network device to the first terminal.

In an implementation, the resource mode configuration information may be used to separately indicate a resource allocation mode of the SL PRS.

In another implementation, the resource mode configuration information may be used to indicate a resource allocation mode of the sidelink, and the SL PRS may reuse the resource allocation mode of the sidelink.

In some embodiments, in a case that the resource allocation mode corresponding to the SL PRS is mode 1, the radio resource for transmitting the SL PRS may be allocated by the network device in a resource allocation mode of dynamic scheduling or configured grant (CG).

In step S302, the first terminal determines the power configuration information corresponding to the SL PRS according to the resource allocation mode.

In some embodiments of the present disclosure, in a case that the resource allocation mode is mode 1, the radio resource for transmitting the SL PRS is allocated by the network device in a dynamic scheduling mode or a configured grant (CG) mode.

In some embodiments, the first terminal may receive a radio link control (RRC) message or a medium access control control element (MAC CE) transmitted by the network device, and acquire the power configuration information corresponding to the first terminal according to the RRC message or MAC CE. The power configuration information may be configured per UE.

In some other embodiments, in a case that the radio resource for the SL PRS is allocated by the network device in the dynamic scheduling mode, the first terminal may receive a scheduling indication corresponding to each dynamic scheduling, and acquire the power configuration information from the scheduling indication. The scheduling indication may be a PDCCH DCI.

In some other embodiments, in a case that the radio resource is allocated by the network device in the CG mode, the first terminal may receive a configuration indication corresponding to each CG, and acquire the power configuration information from the configuration indication.

The configuration indication may be a configuration DCI for configuring the CG, an activation DCI for activating the CG, or a RRC message or a MAC CE for configuring the CG.

In an implementation, the first terminal may acquire the power configuration information corresponding to the first terminal from the configuration indication, and the power configuration information is configured per UE.

In another implementation, the first terminal may acquire the power configuration information corresponding to the CG from the configuration indication, and the power configuration information is configured per CG.

In another implementation, the first terminal may acquire the power configuration information corresponding to at least one SL PRS resource configuring the CG from the configuration indication, and the power configuration information is configured per CG and per SL PRS resource. The SL PRS resource may be a subset of the radio resource for transmitting the SL PRS, and for example, the radio resource for transmitting the SL PRS may include a plurality of SL PRS resources.

In yet another implementation, the first terminal may acquire the power configuration information corresponding to at least one SL PRS resource set configuring the CG from the configuration indication, and the power configuration information is configured per CG and per SL PRS resource set. Similarly, the SL PRS resource set may be a subset of the radio resource for transmitting the SL PRS. For example, the radio resource for transmitting the SL PRS may include a plurality of SL PRS resource sets.

In some embodiments, in a case that the radio resource is allocated by the network device in the CG mode, one or more pieces of power configuration information may be provided. For example, each CG may correspond to respective independent power configuration information, or each SL PRS resource of each CG corresponds to respective independent power configuration information, or each SL PRS resource set of each CG corresponds to respective independent power configuration information, or CGs of all SL PRSs correspond to the same power configuration information, or each terminal corresponds to respective independent power configuration information.

In some embodiments, the first terminal may also receive a second message transmitted by the network device, the second message may include CG configuration information, and the power configuration information may be determined according to the CG configuration information.

The second message may include at least one of a RRC message, a MAC CE, a DCI or other messages transmitted by the network device to the first terminal.

In an implementation, the second message may be an RRC dedicated message corresponding to the first terminal.

In an implementation, in a case that each SL PRS resource of each CG corresponds to respective independent power configuration information, the second message may include one or more SL PRS resources.

In another implementation, in a case that each SL PRS resource set of each CG corresponds to respective independent power configuration information, the second message may include one or more SL PRS resource sets.

In an implementation, the power configuration information may be configured per CG. For example, the power configuration information may be included in the activation DCI of each CG, so that the first terminal may acquire the power configuration information in the activation DCI corresponding to each CG.

In some other embodiments, in a case that the radio resource is allocated by the network device in the resource allocation mode of dynamical scheduling, the power configuration information may be configured separately for different terminals.

In an implementation, the power configuration information may be configured separately every time of dynamic scheduling, for example, the power configuration information may be contained in the PDCCH DCI of each dynamic scheduling, so that the first terminal may acquire the power configuration information in the PDCCH DCI corresponding to each dynamic scheduling.

In an implementation, the power configuration information may be configured separately for each terminal. For example, the power configuration information may be notified to the first terminal by the RRC message or MAC CE. The power configuration information may be applied to the dynamically scheduled SL-PRS and the configured-grant scheduled SL-PRS.

In this way, in a case that the resource allocation mode is mode 1, the first terminal may acquire the power configuration information through any one or more of the above ways.

In some other embodiments of the present disclosure, in a case that the resource allocation mode is mode 2, the power configuration information may come from SL configuration parameters transmitted by the network device, or SL configuration parameters preconfigured by the first terminal, or system conventions or protocol conventions.

In some embodiments, in a case that the resource allocation mode is mode 2, and the sidelink configuration information transmitted by the network device is received (for example, the first terminal is in a state of network coverage, that is, UE in coverage), the power configuration information is determined according to the sidelink configuration information.

In some other embodiments, in a case that the resource allocation mode is mode 2, and the sidelink configuration information transmitted by the network device is not received (for example, the first terminal is in a state of no network coverage, that is, UE out of coverage), the power configuration information is determined according to the sidelink pre-configuration information configured in advance.

In this way, in a case that the resource allocation mode is mode 2, the first terminal may acquire the power configuration information through any one or more of the above ways.

In step S303, the first terminal determines a first transmission power corresponding to the SL PRS according to the power configuration information.

It should be noted that the specific implementation of step S303 may refer to the description of step S202 in the previous embodiment of the present disclosure, and will not be repeated here.

In this way, the first terminal may determine the power configuration information corresponding to the SL PRS according to the resource allocation mode, and determine the first transmission power corresponding to the SL PRS according to the power configuration information.

Fig. 4 is a flow chart of a method for transmitting a positioning reference signal according to an illustrative embodiment. As shown in Fig. 4, the method may include the following steps.

In step S401, a first terminal transmits power configuration information to a second terminal.

The first terminal is a terminal that transmits an SL PRS, and the second terminal is a terminal that receives the SL PRS.

In some embodiments, the power configuration information may be power configuration information corresponding to the SL PRS determined by the first terminal.

In some embodiments, the power configuration information may include a first transmission power corresponding to transmitting the SL PRS.

In some other embodiments, the power configuration information may include at least one of a path loss compensation factor, a target reception power, and a path loss reference signal.

In some embodiments, the first terminal may send a third message to the second terminal, and the third message may include the power configuration information.

In an implementation, the third message may include at least one of a sidelink radio resource control (RRC) message, a sidelink medium access control control element (MAC CE), sidelink downlink control information (DCI) or other messages corresponding to the sidelink.

In another implementation, the third message may be a sidelink system broadcast message, a sidelink RRC reconfiguration message, a sidelink LTE positioning protocol (SLPP) message, or a sidelink RRC message dedicated to the first terminal.

In some embodiments, the power configuration information may be used to instruct the second terminal to determine a path loss according to the power configuration information.

For example, the second terminal may determine the first transmission power of the SL PRS based on the power configuration information, and the path loss may be calculated and obtained according to the first transmission power and a reception power of the second terminal receiving the SL PRS. For example, a difference between the first transmission power and the reception power may be taken as the path loss.

In some other embodiments, the power configuration information may be used to instruct the second terminal to receive the SL PRS according to the power configuration information.

For example, the second terminal may determine the reception power of receiving the SL PRS according to the power configuration information, and receive the SL PRS according to the reception power. For example, the second terminal may demodulate a received wireless signal to obtain the SL PRS in a case that the power of the received wireless signal is greater than or equal to the reception power. For another example, in a case that the power of the received wireless signal is less than the reception power, the second terminal may not demodulate the wireless signal, and may determine that the SL PRS is not received.

It should be noted that this embodiment may be combined with the aforementioned embodiments or implementations of the present disclosure and various alternatives thereof without contradiction.

In this way, the first terminal transmits the power configuration information to the second terminal to instruct the second terminal to receive the SL PRS according to the power configuration information, so that the reliability of the transmission of the SL PRS may be improved.

Fig. 5 is a flow chart of a method for transmitting a positioning reference signal according to an illustrative embodiment. This method may be performed by the second terminal in the above communication system. As shown in Fig. 5, the method may include the following steps.

In step S501, the second terminal receives an SL PRS transmitted by a first terminal.

The SL PRS is a signal transmitted by the first terminal according to a first transmission power, and the first transmission power may be a power determined by the first terminal according to power configuration information corresponding to the SL PRS.

By adopting the above method, the power of the SL PRS may be flexibly determined by the first terminal according to the power configuration information, so that the power of the SL PRS may be prevented from being too large or too small, and the reliability of the transmission of the SL PRS may be improved.

In some embodiments of the present disclosure, the second terminal may also receive the power configuration information transmitted by the first terminal.

In some embodiments, the power configuration information may be the power configuration information corresponding to the SL PRS determined by the first terminal.

In some embodiments, the power configuration information may include the first transmission power corresponding to transmitting the SL PRS.

In some other embodiments, the power configuration information may include at least one of a path loss compensation factor, a target reception power, and a path loss reference signal.

In some embodiments, the second terminal may receive a third message transmitted by the first terminal, and the third message may include the power configuration information.

In an implementation, the third message may include at least one of a sidelink RRC message, a sidelink MAC CE, a sidelink DCI or other messages corresponding to a sidelink.

In another implementation, the third message may be a sidelink system broadcast message, a sidelink RRC reconfiguration message, a sidelink LTE positioning protocol message, or a sidelink RRC message dedicated to the first terminal.

In some embodiments, the second terminal determines a path loss according to the power configuration information.

For example, the second terminal may determine the first transmission power of the SL PRS based on the power configuration information, and the path loss may be calculated and obtained according to the first transmission power and a reception power of the second terminal receiving the SL PRS. For example, a difference between the first transmission power and the reception power may be taken as the path loss.

In some other embodiments, the second terminal receives the SL PRS according to the power configuration information.

For example, the second terminal may determine the reception power of receiving the SL PRS according to the power configuration information, and receive the SL PRS according to the reception power. For example, the second terminal may demodulate a received wireless signal to obtain the SL PRS in a case that the power of the received wireless signal is greater than or equal to the reception power. For another example, in a case that the power of the received wireless signal is less than the reception power, the second terminal may not demodulate the wireless signal, and may determine that the SL PRS is not received.

In this way, the second terminal may determine the path loss or receive the SL PRS according to the reception power configuration information, which may improve the reliability of the transmission of the SL PRS.

Fig. 6 is a flow chart of a method for transmitting a positioning reference signal according to an illustrative embodiment. This method may be performed by the network device in the above communication system. As shown in Fig. 6, the method may include the following steps.

In step S601, the network device transmits sidelink configuration information to a first terminal.

The sidelink configuration information is used to instruct the first terminal to determine power configuration information corresponding to an SL PRS.

In some embodiments, the network device may transmit the sidelink configuration information to the first terminal through a broadcast message.

In some other embodiments, the network device may transmit the sidelink configuration information to the first terminal through a first message.

The first message may be a dedicated message corresponding to the first terminal. For example, the first message may include at least one of a RRC message, a MAC CE, a DCI or other messages transmitted by the network device to the first terminal.

In some embodiments, the sidelink configuration information may include the power configuration information.

In some embodiments, the power configuration information may at least include a second transmission power corresponding to the SL PRS. The first terminal may determine a first transmission power corresponding to the SL PRS according to the second transmission power, for example, take the second transmission power as the first transmission power corresponding to the SL PRS.

The second transmission power may be a resource power corresponding to a radio resource for transmitting the SL PRS. For example, the first transmission power may be an average resource power, a maximum resource power or a minimum resource power corresponding to the radio resource for transmitting the SL PRS.

In an implementation, the radio resource for transmitting the SL PRS may include at least one resource element (RE), and the average resource power may be energy per resource element (EPRE). The EPRE may be used to represent an average power of at least one RE. Similarly, the maximum resource power may represent a maximum power of at least one RE, and the minimum resource power may represent a minimum power of at least one RE.

In another implementation, the radio resource for transmitting the SL PRS may include at least one resource block (RB), and the average resource power may be an average power of each RB. Similarly, the maximum resource power may represent a maximum power of at least one RB, and the minimum resource power may represent a minimum power of at least one RB.

In an implementation, the second transmission power may be a power value, and the unit of the second transmission power may be decibel milliwatt (dBm) or milliwatt (mw).

In some other embodiments, the power configuration information may include at least one of a path loss compensation factor (alpha), a target reception power (P0) and a path loss reference signal.

In some embodiments, the path loss reference signal may include at least one of:

a sidelink synchronization signal block (SL SSB);
a sidelink channel state information-reference signal (SL CSI-RS);
a sidelink positioning reference signal (SL PRS);
a physical sidelink shared channel (SL PSSCH); and
a physical sidelink control channel (SL PSCCH).

By adopting the above method, the network device transmits the sidelink configuration information to the first terminal, the sidelink configuration information may be used to instruct the first terminal to determine the power configuration information corresponding to the SL PRS. In this way, the first transmission power of the SL PRS may be determined.

Fig. 7 is a flow chart of a method for transmitting a positioning reference signal according to an illustrative embodiment. As shown in Fig. 7, the method may include the following steps.

In step S701, a network device transmits sidelink configuration information to a first terminal.

In step S702, the first terminal determines power configuration information corresponding to an SL PRS according to the sidelink configuration information, and determines a first transmission power corresponding to the SL PRS according to the power configuration information.

In step S703, the first terminal transmits the SL PRS to a second terminal according to the first transmission power.

It should be noted that this embodiment may be combined with the aforementioned embodiments or implementations of the present disclosure and various alternatives thereof, and the specific implementations of the above steps in this embodiment may also refer to the descriptions in the aforementioned embodiments of the present disclosure, and will not be repeated here.

By adopting the above method, the network device transmits the sidelink configuration information to the first terminal, and the first terminal determines the power configuration information corresponding to the SL PRS according to the sidelink configuration information, and determines the first transmission power corresponding to the SL PRS according to the power configuration information. In this way, the first transmission power of the SL PRS may be flexibly controlled, and the reliability of the transmission of the SL PRS may be improved.

In an illustrative embodiment, the present disclosure also provides a communication system, which may include a first terminal and a network device. The first terminal may perform the method for transmitting the positioning reference signal involving the terminal in the aforementioned embodiments of the present disclosure, and the network device may perform the method for transmitting the positioning reference signal involving the network device in the above embodiments.

In some embodiments of the present disclosure, the first terminal may acquire power configuration information (also called power parameter configuration information) of an SL PRS, and determine a first transmission power of the SL PRS based on the power configuration information.

In some embodiments of the present disclosure, the power configuration information of the SL PRS may come from sidelink (SL) pre-configuration information of the first terminal, or from sidelink (SL) configuration information broadcast by the network device, or from power configuration information of the SL PRS configured by the network device through a RRC dedicated message, or may be configuration of system conventions or protocol conventions.

In some embodiments, in a case that SL-PRS resource is allocated in a resource allocation mode of configured grant (CG), the power configuration information of the SL-PRS may be configured separately per CG, or configured separately per CG and per SL-PRS resource set, or configured separately per CG and per SL-PRS resource, or configured with the same power parameters for all SL-PRS configured grants, or configured separately per UE.

In some embodiments, the network device may indicate the above power configuration information through configured grant configuration information of the RRC dedicated message.

In some embodiments, in a case that the power configuration information configured separately per CG and per SL PRS resource set is adopted, one configured grant may contain one or more SL-PRS resource sets and the power configuration information corresponding to each SL PRS resource set.

In some embodiments, in a case that the power configuration information configured separately per CG and per SL PRS resource is adopted, one configured grant may contain one or more SL-PRS resources and the power configuration information corresponding to each SL PRS resource.

In some embodiments, in a case that the power configuration information configured separately per UE is adopted, the power configuration information may be applied to a dynamically scheduled SL-PRS and a configured-grant scheduled SL-PRS.

In some embodiments, in a case that the SL-PRS resource is allocated in an autonomous resource allocation mode, the power configuration information may come from SL configuration parameters broadcast by the network device, or SL configuration parameters preconfigured by the first terminal, or system conventions or protocol conventions.

In some embodiments, in a case that the first terminal (e.g., UE in coverage) may receive a message from the network device, the power configuration information may be determined by using the SL configuration parameters broadcast by the network device; and in a case that the first terminal (e.g., UE out of coverage) cannot receive the message from the network device, the power configuration information may be determined by using the preconfigured SL configuration parameters.

In some embodiments, in a case that the SL PRS resource is allocated in a resource allocation mode of dynamic scheduling and/or configured grant, the power configuration information is configured separately per UE, and may be notified to the terminal through a RRC or a MAC CE.

In some embodiments, in a case that the SL-PRS adopts a dynamic scheduling mode, the power configuration information may be configured separately every time of dynamic scheduling. For example, the power configuration information may be contained in the PDCCH DCI of each dynamic scheduling.

In some embodiments, in a case that the SL-PRS adopts a resource scheduling mode of configured grant type 2, the power configuration information may be configured per CG, for example, the power configuration information may be contained in the activation DCI of each configured grant.

In some embodiments of the present disclosure, the power configuration information includes an SL PRS resource power.

In some embodiments, the SL PRS resource power is an average EPRE of a resource element carrying the SL-PRS.

In some embodiments, the first terminal may transmit the SL-PRS based on the SL PRS resource power for one or more of the following situations:

in a case that the SL PRS is transmitted in a broadcast mode or a multicast mode;
in a case that the first terminal only has the power parameter configuration;
in a case that the first terminal adopts the autonomous resource allocation mode;
in a case that the first terminal cannot acquire a path loss of an SL with an SL-PRS receiver, for example, the first terminal cannot receive the SL-SSB, or PSCCH, or PSSCH, or CSI-RS, or SL-PRS transmitted by the SL-PRS receiver, in which the SL-PRS receiver may be a second terminal that receives the SL PRS;
in a case that the first terminal does not establish an SL connection with the SL-PRS receiver; and
in a case that the SL-PRS receiver is not configured with a measurement report to the first terminal, such as a CSI-RS report.

In some other embodiments of the present disclosure, the power configuration information may include at least one of:

a path loss compensation factor (alpha), which may range from 0 to 1;
a target reception power (P0); and
a path loss reference signal.

In some embodiments, the first transmission power corresponding to the SL-PRS = p0+alpha* path loss+other power compensation factors.

In some embodiments, the first terminal may transmit the SL-PRS based on the power configuration information for one or more of the following situations:

in a case that the SL PRS is transmitted in a unicast mode or a multicast mode;
in a case that the first terminal has both SL-PRS resource power configuration and the power parameter configuration, the power parameter configuration is preferentially used;
in a case that the first terminal only has the power parameter configuration, the UE uses the power parameter configuration;

in a case that the first terminal may acquire a path loss of an SL with a SL-PRS receiver, the UE uses the power parameter configuration, for example, the first terminal may receive the SL-SSB, or PSCCH, or PSSCH, or CSI-RS, or SL-PRS transmitted by the SL-PRS receiver, in which, similarly, the SL-PRS receiver may be a second terminal that receives the SL PRS;

in a case that the first terminal establishes an SL connection with the SL-PRS receiver, the UE uses the power parameter configuration; and

in a case that the SL-PRS receiver is configured with a measurement report to the UE, such as a CSI-RS report.

In some embodiments, the path loss reference signal includes at least one of:

a sidelink synchronization signal block (SL SSB);
a sidelink channel state information-reference signal (SL CSI-RS);
a sidelink positioning reference signal (SL PRS);
a physical sidelink shared channel (SL PSSCH); and
a physical sidelink control channel (SL PSCCH).

In some embodiments, the path loss reference signal is transmitted by the first terminal to the second terminal, or transmitted by the second terminal to the first terminal. The second terminal is the receiver of the SL-PRS transmitted by the first terminal. In a case that the path loss reference signal is transmitted by the first terminal to the second terminal, the second terminal reports the measurement result of the reference signal to the first terminal, and the first terminal calculates the path loss, or the second terminal directly reports the path loss to the first terminal.

In some embodiments, in a case that the path loss reference signal includes the SL PSSCH/PSCCH, the path loss reference signal may be based on a DMRS of the SL PSSCH/PSCCH.

In some embodiments, in a case that the path loss reference signal is in the form of system conventions or protocol conventions, it does not need to be configured.

In some embodiments, in a case that the path loss reference signal includes the SL SSB or the SL CSI-RS, it may indicate an SL SSB index or an SL CSI-RS index.

In some embodiments of the present disclosure, the first terminal may transmit the power configuration information corresponding to the SL PRS to the second terminal. The first terminal is the transmitter of the SL PRS, and the second terminal is the receiver of the SL PRS.

In some embodiments, the first terminal may transmit a third message to the second terminal, and the third message may include the power configuration information.

The third message may be a sidelink system broadcast message, a sidelink RRC reconfiguration message, an SLPP message or a sidelink RRC message dedicated to the first terminal.

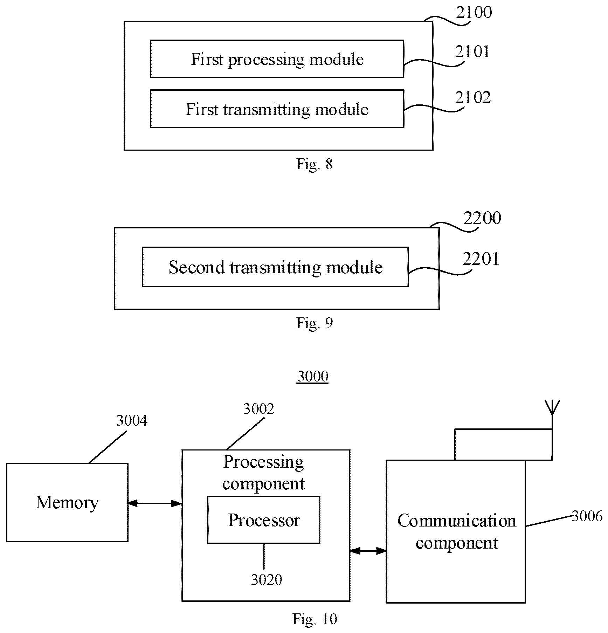

Fig. 8 is a block diagram of an apparatus 2100 for transmitting a positioning reference signal according to an illustrative embodiment. The apparatus may be applied to a first terminal. As shown in Fig. 8, the apparatus 2100 may include: a first processing module 2101 configured to determine a first transmission power corresponding to a sidelink positioning reference signal (SL PRS) according to power configuration information corresponding to the SL PRS; and a first transmitting module 2102 configured to transmit the SL PRS to a second terminal according to the first transmission power.

In some embodiments, the power configuration information includes a second transmission power; and the first processing module 2101 is configured to take the second transmission power as the first transmission power in a case that the first terminal meets a first condition. The first condition includes at least one of:

a transmission mode of the SL PRS being a broadcast mode or a multicast mode;
the first terminal including one piece of power configuration information;
the first terminal adopting mode 2 to allocate resources for the SL PRS; and
the first terminal not acquiring a path loss of a sidelink of the second terminal.

In some embodiments, the second transmission power is an average resource power corresponding to a radio resource for transmitting the SL PRS.

In some embodiments, the radio resource includes a resource element (RE), and the average resource power is energy per RE (EPRE).

In some embodiments, the power configuration information includes at least one of a path loss compensation factor, a target reception power and a path loss reference signal; and the first processing module 2101 is configured to determine the first transmission power according to the power configuration information in a case that the first terminal meets a second condition. The second condition includes at least one of:

a transmission mode of the SL PRS being a unicast mode or a multicast mode;
the first terminal including a plurality of pieces of power configuration information;
the first terminal including one piece of power configuration information; and
the first terminal acquiring a path loss of a sidelink of the second terminal.

In some embodiments, the first processing module 2101 is configured to: measure a path loss according to the path loss reference signal; and calculate the first transmission power according to the path loss compensation factor, the target reception power and the path loss.

In some embodiments, the path loss reference signal includes at least one of:

a sidelink synchronization signal block (SL SSB);
a sidelink channel state information-reference signal (SL CSI-RS);
a sidelink positioning reference signal (SL PRS);
a physical sidelink shared channel (SL PSSCH); and
a physical sidelink control channel (SL PSCCH).

In some embodiments, the first processing module 2101 is further configured to: determine the power configuration information according to sidelink pre-configuration information configured in advance; or, receive the sidelink configuration information transmitted by a network device, and determine the power configuration information according to the sidelink configuration information.

In some embodiments, the first processing module 2101 is configured to: receive a broadcast message transmitted by a network device, in which the broadcast message includes the sidelink configuration information; or, receive a first message transmitted by a network device to the first terminal, in which the first message includes the sidelink configuration information.

In some embodiments, the first processing module 2101 is further configured to: determine a resource allocation mode corresponding to the SL PRS; and determine the power configuration information corresponding to the SL PRS according to the resource allocation mode.

In some embodiments, the resource allocation mode is mode 1 or mode 2, mode 1 is a resource allocation mode in which resource selection is made based on a network device, and mode 2 is a resource allocation mode in which resource selection is made based on a terminal.

In some embodiments, the first processing module 2101 is configured to determine the power configuration information according to the sidelink configuration information in a case that the resource allocation mode is mode 2, and the sidelink configuration information transmitted by a network device is received; or, determine the power configuration information according to the sidelink pre-configuration information configured in advance, in a case that the resource allocation mode is mode 2, and the sidelink configuration information transmitted by a network device is not received.

In some embodiments, in a case that the resource allocation mode is mode 1, a radio resource for transmitting the SL PRS is allocated by a network device in a dynamic scheduling mode or a configured grant (CG) mode; and the first processing module 2101 is configured to:

receive a radio resource control (RRC) message or a medium access control control element (MAC CE) transmitted by a network device, and acquire the power configuration information corresponding to the first terminal according to the RRC message or the MAC CE; or,
in a case that the radio resource is allocated by the network device in the dynamic scheduling mode, receive a scheduling indication corresponding to each dynamic scheduling, and acquire the power configuration information from the scheduling indication; or,
in a case that the radio resource is allocated by the network device in the CG mode, receive a configuration indication corresponding to each CG, and acquire the power configuration information from the configuration indication.

In some embodiments, the first processing module 2101 is configured to:

acquire the power configuration information corresponding to the first terminal from the configuration indication; or,
acquire the power configuration information corresponding to the CG from the configuration indication; or,
acquire the power configuration information corresponding to at least one SL PRS resource of the CG from the configuration indication; or,
acquire the power configuration information corresponding to at least one SL PRS resource set of the CG from the configuration indication.

In some embodiments, the first transmitting module 2102 is further configured to transmit the power configuration information to the second terminal.

Fig. 9 is a block diagram of an apparatus 2200 for transmitting a positioning reference signal according to an illustrative embodiment. The apparatus may be applied to a network device. As shown in Fig. 10, the apparatus 2200 may include: a second transmitting module 2201 configured to send sidelink configuration information to a first terminal, in which the sidelink configuration information is used to instruct the first terminal to determine power configuration information corresponding to a sidelink positioning reference signal (SL PRS).

In some embodiments, the second transmitting module 2201 is configured to:

transmit the sidelink configuration information to the first terminal through a broadcast message; or,
transmit the sidelink configuration information to the first terminal through a first message, in which the first message is a dedicated message corresponding to the first terminal.

In some embodiments, the power configuration information includes a second transmission power corresponding to the SL PRS.

In some embodiments, the second transmission power is an average resource power corresponding to a radio resource for transmitting the SL PRS.

In some embodiments, the radio resource includes a resource element (RE), and the average resource power is energy per RE (EPRE).

In some embodiments, the power configuration information includes at least one of:

　　a path loss compensation factor;
　　a target reception power; and
　　a path loss reference signal.

In some embodiments, the path loss reference signal includes at least one of:

　　a sidelink synchronization signal block (SL SSB);
　　a sidelink channel state information-reference signal (SL CSI-RS);
　　a sidelink positioning reference signal (SL PRS);
　　a physical sidelink shared channel (SL PSSCH); and
　　a physical sidelink control channel (SL PSCCH).

With regard to the apparatuses in the above embodiments, the specific way in which each module performs operations has been described in detail in the embodiments of the methods, and will not be described in detail here.

Fig. 10 is a block diagram of an apparatus 3000 for transmitting a positioning reference signal according to an illustrative embodiment. The apparatus 3000 for transmitting the positioning reference signal may be the terminal (such as the first terminal or the second terminal) in the communication system shown in Fig. 1, or the network device in the communication system.

Referring to Fig. 10, the apparatus 3000 may include one or more of: a processing component 3002, a memory 3004, and a communication component 3006.

The processing component 3002 may be used to control the overall operation of the apparatus 3000, such as operations associated with display, telephone call, data communication, camera operation and recording operation. The processing component 3002 may include one or more processors 3020 to execute instructions to complete all or part of the steps of the methods for transmitting the positioning reference signal described above. In addition, the processing component 3002 may include one or more modules to facilitate interaction between the processing component 3002 and other components. For example, the processing component 3002 may include a multimedia module to facilitate interaction between the multimedia component and the processing component 3002.

The memory 3004 is configured to store various types of data to support operations in the apparatus 3000.

Examples of these data include instructions for any application or method operating in the apparatus 3000, contact data, phone book data, messages, pictures, videos, and the like. The memory 3004 may be realized by any type of volatile or nonvolatile memory device or their combination, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic disk or an optical disk.

The communication component 3006 is configured to facilitate wired or wireless communication between the apparatus 3000 and other devices. The apparatus 3000 may access wireless networks based on communication standards, such as Wi-Fi, 2G, 3G, 4G, 5G, 6G, NB-IOT, eMTC, etc., or their combination. In an illustrative embodiment, the communication component 3006 receives a broadcast signal or broadcast related information from an external broadcast management system via a broadcast channel. In an illustrative embodiment, the communication component 3006 further includes a near field communication (NFC) module to facilitate short-range communication. For example, the NFC module may be implemented based on radio frequency identification (RFID) technology, infrared data association (IrDA) technology, ultra-wideband (UWB) technology, Bluetooth (BT) technology and other technologies.

In an illustrative embodiment, the apparatus 3000 may be implemented by one or more application specific integrated circuits (ASICs), digital signal processors (DSPs), digital signal processing devices (DSPDs), programmable logic devices (PLDs), field programmable gate arrays (FPGAs), controllers, microcontrollers, microprocessors or other electronic components, for performing the above methods for transmitting the positioning reference signal.

The apparatus 3000 may be an independent electronic device or a part of an independent electronic device. For example, in an embodiment, the electronic device may be an integrated circuit (IC) or a chip, and the integrated circuit may be an IC or a set of multiple ICs. The chip may include, but is not limited to, the following types: a graphics processing unit (GPU), a central processing unit (CPU), a field programmable gate array (FPGA), a digital signal processor (DSP), an application specific integrated circuit (ASIC), a system on chip (SoC), etc. The integrated circuit or chip may be used to execute executable instructions (or codes) to realize the method for transmitting the positioning reference signal. The executable instructions may be stored in the integrated circuit or chip, and may also be acquired from other apparatuses or devices. For example, the integrated circuit or chip includes a processor, a memory, and an interface for communicating with other apparatuses. The executable instruction may be stored in the processor, and when the executable instructions are executed by the processor, the method for transmitting the positioning reference signal is realized. Alternatively, the integrated circuit or chip may receive the executable instructions through the interface and transmit them to the processor for execution, so as to realize the above method for transmitting the positioning reference signal.

In an illustrative embodiment, the present disclosure also provides a computer-readable storage medium on which computer program instructions are stored, which, when executed by a processor, cause the steps of the method for transmitting the positioning reference signal according to the present disclosure to be performed. For example, the computer-readable storage medium may be a non-transitory computer-readable storage medium including instructions, for example, it may be the above memory 3004 including instructions, which may be executed by the processor 3020 of the apparatus 3000 to complete the above method for transmitting the positioning reference signal. For example, the non-transitory computer-readable storage medium may be a ROM, a random access memory (RAM), a CD-ROM, a magnetic tape, a floppy disk, an optical data storage device, etc.

In another illustrative embodiment, a computer program product is also provided, which includes a computer program executable by a programmable device, and the computer program has a code portion configured to execute the above method for transmitting the positioning reference signal when executed by the programmable device.

Other embodiments of the present disclosure will easily occur to those skilled in the art after considering the specification and practicing the present disclosure. The present disclosure is intended to cover any variations, uses or adaptations of the present disclosure, which follow the general principles of the present disclosure and include common sense or conventional technical means in the art that are not disclosed in the present disclosure. The specification and embodiments are to be regarded as illustrative only, with the true scope and spirit of the present disclosure being indicated by the following claims.

It should be understood that the present disclosure is not limited to the precise structure described above and shown in the drawings, and various modifications and changes may be made without departing from the scope of the present disclosure. The scope of the present disclosure is limited only by the appended claims.

**Claims**

1. A method for transmitting a positioning reference signal, performed by a first terminal, and comprising:

   determining a first transmission power corresponding to a sidelink positioning reference signal (SL PRS) according to power configuration information corresponding to the SL PRS; and transmitting the SL PRS to a second terminal according to the first transmission power.

2. The method according to claim 1, wherein the power configuration information comprises a second transmission power, and determining the first transmission power corresponding to the SL PRS according to the power configuration information corresponding to the SL PRS comprises:

   in a case that the first terminal meets a first condition, taking the second transmission power as the first transmission power, wherein the first condition comprises at least one of:

   a transmission mode of the SL PRS being a broadcast mode or a multicast mode; the first terminal comprising one piece of power configuration information; the first terminal adopting mode 2 to allocate resources for the SL PRS; or the first terminal not acquiring a path loss of a sidelink of the second terminal.

3. The method according to claim 2, wherein the second transmission power is an average resource power corresponding to a radio resource for transmitting the SL PRS.

4. The method according to claim 3, wherein the radio resource comprises a resource element (RE), and the average resource power is energy per RE (EPRE).

5. The method according to claim 1, wherein the power configuration information comprises at least one of a path loss compensation factor, a target reception power or a path loss reference signal; and determining the first transmission power corresponding to the SL PRS according to the power configuration information corresponding to the SL PRS comprises:

   in a case that the first terminal meets a second condition, determining the first transmission power according to the power configuration information, wherein the second condition comprises at least one of:

   a transmission mode of the SL PRS being a unicast mode or a multicast mode; the first terminal comprising a plurality of pieces of power configuration information; the first terminal comprising one piece of power configuration information; or
the first terminal acquiring a path loss of a sidelink of the second terminal.

6. The method according to claim 5, wherein determining the first transmission power according to the power configuration information comprises:

measuring the path loss according to the path loss reference signal; and
calculating the first transmission power according to the path loss compensation factor, the target reception power and the path loss.

7. The method according to claim 5 or 6, wherein the path loss reference signal comprises at least one of:

a sidelink synchronization signal block (SL SSB);
a sidelink channel state information-reference signal (SL CSI-RS);
a sidelink positioning reference signal (SL PRS);
a physical sidelink shared channel (SL PSSCH); or
a physical sidelink control channel (SL PSCCH).

8. The method according to any one of claims 1-7, wherein the power configuration information is determined in a way of:

determining the power configuration information according to sidelink pre-configuration information configured in advance; or
receiving sidelink configuration information transmitted by a network device, and determining the power configuration information according to the sidelink configuration information.

9. The method according to claim 8, wherein receiving the sidelink configuration information transmitted by the network device comprises:

receiving a broadcast message transmitted by the network device, wherein the broadcast message comprises the sidelink configuration information; or
receiving a first message transmitted by the network device to the first terminal, wherein the first message comprises the sidelink configuration information.

10. The method according to any one of claims 1-9, wherein the power configuration information is determined in a way of:

determining a resource allocation mode corresponding to the SL PRS; and
determining the power configuration information corresponding to the SL PRS according to the resource allocation mode.

11. The method according to claim 10, wherein the resource allocation mode is mode 1 or mode 2, mode 1 is a resource allocation mode in which resource selection is made based on a network device, and mode 2 is a resource allocation mode in which resource selection is made based on a terminal.

12. The method according to claim 11, wherein determining the power configuration information corresponding to the SL PRS according to the resource allocation mode comprises:

in a case that the resource allocation mode is mode 2, and the sidelink configuration information transmitted by the network device is received, determining the power configuration information according to the sidelink configuration information; or
in a case that the resource allocation mode is mode 2, and the sidelink configuration information transmitted by the network device is not received, determining the power configuration information according to sidelink configuration information configured in advance.

13. The method according to claim 11, wherein in a case that the resource allocation mode is mode 1, a radio resource configured to transmit the SL PRS is allocated by the network device in a dynamic scheduling mode or a configured grant (CG) mode; and determining the power configuration information corresponding to the SL PRS according to the resource allocation mode comprises:

receiving a radio resource control (RRC) message or a medium access control control element (MAC CE) transmitted by the network device, and acquiring the power configuration information corresponding to the first terminal according to the RRC message or the MAC CE; or
in a case that the radio resource is allocated by the network device in the dynamic scheduling mode, receiving a scheduling indication corresponding to each dynamic scheduling, and acquiring the power configuration information from the scheduling indication; or
in a case that the radio resource is allocated by the network device in the CG mode, receiving a configuration indication corresponding to each CG, and acquiring the power configuration information from the configuration indication.

14. The method according to claim 13, wherein acquiring the power configuration information from the configuration indication comprises:

acquiring the power configuration information corresponding to the first terminal from the configuration indication; or

acquiring the power configuration information corresponding to the CG from the configuration indication; or

acquiring the power configuration information corresponding to at least one SL PRS resource of the CG from the configuration indication; or

acquiring the power configuration information corresponding to at least one SL PRS resource set of the CG from the configuration indication.

15. The method according to any one of claims 1-14, further comprising:
transmitting the power configuration information to the second terminal.

16. A method for transmitting a positioning reference signal, performed by a network device, and comprising:
transmitting sidelink configuration information to a first terminal, wherein the sidelink configuration information is configured to instruct the first terminal to determine power configuration information corresponding to a sidelink positioning reference signal (SL PRS).

17. The method according to claim 16, wherein transmitting the sidelink configuration information to the first terminal comprises:

transmitting the sidelink configuration information to the first terminal through a broadcast message; or
transmitting the sidelink configuration information to the first terminal through a first message, wherein the first message is a dedicated message corresponding to the first terminal.

18. The method according to claim 16, wherein the power configuration information comprises a second transmission power corresponding to the SL PRS.

19. The method according to claim 16, wherein the power configuration information comprises at least one of:

a path loss compensation factor;
a target reception power; or
a path loss reference signal.

20. The method according to claim 19, wherein the path loss reference signal comprises at least one of:

a sidelink synchronization signal block (SL SSB);
a sidelink channel state information-reference signal (SL CSI-RS);
a sidelink positioning reference signal (SL PRS);
a physical sidelink shared channel (SL PSSCH); or
a physical sidelink control channel (SL PSCCH).

21. An apparatus for transmitting a positioning reference signal, applied to a first terminal, and comprising:

a first processing module configured to determine a first transmission power corresponding to a sidelink positioning reference signal (SL PRS) according to power configuration information corresponding to the SL PRS; and
a first transmitting module configured to send the SL PRS to a second terminal according to the first transmission power.

22. An apparatus for transmitting a positioning reference signal, applied to a network device, and comprising:
a second transmitting module configured to send sidelink configuration information to a first terminal, wherein the sidelink configuration information is configured to instruct the first terminal to determine power configuration information corresponding to a sidelink positioning reference signal (SL PRS).

23. An apparatus for transmitting a positioning reference signal, comprising:

a processor; and
a memory configured to store instructions executable by the processor,
wherein the processor is configured to perform the steps of the method according to any one of claims 1-15, or to perform the steps of the method according to any one of claims 16-20.

24. A computer-readable storage medium, storing computer program instructions, which, when executed by a processor, cause the steps of the method according to any one of claims 1-15 to be performed, or cause the steps of the method according to any one of claims 16-20 to be performed.

25. A communication system, comprising:

a first terminal configured to perform the method according to any one of claims 1-15; and
a network device configured to perform the method according to any one of claims 16-20.

Fig. 1

The first terminal determines a first transmission power corresponding to a sidelink positioning reference signal (SL PRS) according to power configuration information corresponding to the SL PRS

S201

The first terminal transmits the SL PRS to the second terminal according to the first transmission power

S202

Fig. 2

A first terminal determines a resource allocation mode corresponding to an SL PRS — S301

The first terminal determines the power configuration information corresponding to the SL PRS according to the resource allocation mode — S302

The first terminal determines a first transmission power corresponding to the SL PRS according to the power configuration information — S303

Fig. 3

A first terminal transmits power configuration information to a second terminal — S401

Fig. 4

The second terminal receives an SL PRS transmitted by a first terminal — S501

Fig. 5

The network device transmits sidelink configuration information to a first terminal — S601

Fig. 6

| Second terminal | First terminal | Network device |
|---|---|---|

S701 : a network device transmits sidelink configuration information to a first terminal

S702 : the first terminal determines power configuration information corresponding to an SL PRS according to the sidelink configuration information, and determines a first transmission power corresponding to the SL PRS according to the power configuration information

S703: the first terminal transmits the SL PRS to a second terminal according to the first transmission power

Fig. 7

2100

First processing module — 2101

First transmitting module — 2102

Fig. 8

2200

Second transmitting module — 2201

Fig. 9

3000

Memory — 3004

Processing component — 3002

Processor

3020

Communication component — 3006

Fig. 10

## INTERNATIONAL SEARCH REPORT

| International application No. |
| --- |
| **PCT/CN2023/074476** |

| A. | CLASSIFICATION OF SUBJECT MATTER |
| --- | --- |

H04W 52/18(2009.01)i

According to International Patent Classification (IPC) or to both national classification and IPC

| B. | FIELDS SEARCHED |
| --- | --- |

Minimum documentation searched (classification system followed by classification symbols)

IPC:H04W

Documentation searched other than minimum documentation to the extent that such documents are included in the fields searched

Electronic data base consulted during the international search (name of data base and, where practicable, search terms used)

CNABS; CNTXT; CNKI; VEN; USTXT; WOTXT; EPTXT; 3GPP; IEEE: 侧链路, 定位参考信号, 基站, 功率, 配置, 指示, 路径, 损耗, sidelink, SL PRS, ENB, power, configuration, path, loss

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | WO 2023282914 A1 (NOKIA TECHNOLOGIES OY et al.) 12 January 2023 (2023-01-12) claims 1 and 4, and description, paragraphs [0034]-[0057] | 1-25 |
| X | CN 115552984 A (BEIJING XIAOMI MOBILE SOFTWARE CO., LTD.) 30 December 2022 (2022-12-30) description, paragraphs [0077]-[0095] | 1-25 |
| A | CN 111148205 A (HUAWEI TECHNOLOGIES CO., LTD.) 12 May 2020 (2020-05-12) entire document | 1-25 |
| A | CN 113302990 A (HUAWEI TECHNOLOGIES CO., LTD.) 24 August 2021 (2021-08-24) entire document | 1-25 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **08 October 2023** | **12 October 2023** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

| International application No. |
| --- |
| **PCT/CN2023/074476** |

| Patent document cited in search report | | | Publication date (day/month/year) | Patent family member(s) | | | Publication date (day/month/year) |
| --- | --- | --- | --- | --- | --- | --- | --- |
| WO | 2023282914 | A1 | 12 January 2023 | None | | | |
| CN | 115552984 | A | 30 December 2022 | None | | | |
| CN | 111148205 | A | 12 May 2020 | WO | 2020088366 | A1 | 07 May 2020 |
| CN | 113302990 | A | 24 August 2021 | WO | 2020143835 | A1 | 16 July 2020 |

Form PCT/ISA/210 (patent family annex) (July 2022)